## Europäisches Patentamt

## European Patent Office

## Office européen des brevets

(11) Veröffentlichungsnummer: **0 232 886 B1**

# EUROPÄISCHE PATENTSCHRIFT

(45) Veröffentlichungstag der Patentschrift: **20.03.91**

(51) Int. Cl.⁵: **H04J 3/06**

(21) Anmeldenummer: **87101770.3**

(22) Anmeldetag: **09.02.87**

(54) Rahmendekodierung.

(30) Priorität: **10.02.86 DE 3604114**

(43) Veröffentlichungstag der Anmeldung:
**19.08.87 Patentblatt 87/34**

(45) Bekanntmachung des Hinweises auf die
Patenterteilung:
**20.03.91 Patentblatt 91/12**

(84) Benannte Vertragsstaaten:
**AT BE CH DE FR GB IT LI NL SE**

(56) Entgegenhaltungen:
**DE-A- 3 132 198**
**US-A- 3 541 456**
**US-A- 4 002 845**
**US-A- 4 159 535**

**IEEE INTERNATIONAL CONFERENCE ON
COMMUNICATIONS, 17. - 19. Juni 1974, Minneapolis, Minnesota, US, Seiten 39D-1 bis
39D-5, New York, US; G. HANKE: "PCM Receiving equipment of a 640 mbits/s waveguide
transmission system using integrated circuits"**

(73) Patentinhaber: **Siemens Aktiengesellschaft
Wittelsbacherplatz 2
W-8000 München 2(DE)**

(72) Erfinder: **Wissmann, Manfred, Ing. (grad.)
Schinkelstrasse 44
W-8000 MÜnchen 40(DE)**

## Beschreibung

Die Erfindung betrifft ein Verfahren zur Rahmendekodierung gemäß dem Oberbegriff des Patentanspruchs 1.

Aus der US-PS 4 002 845 ist eine Rahmensynchronisierung bekannt, bei der die einander entsprechenden Bits zweier aufeinander folgenden Rahmen verglichen werden. Wenn diese beiden Bits verschiedene Werte aufweisen, wird ein Kennungsbit auf die entsprechende Position in ein Schieberegister geschrieben. Mit diesem Kennungsbit und dem Kennungsbit aus dem nachfolgenden Vergleich wird eine Und-Verknüpfung durchgeführt. Nur noch ein im Schieberegister vorhandenes Kennungsbit mit dem Wert 1 kennzeichnet die Position des Synchronisierbits.

In zunehmendem Maße werden in der Übertragungstechnik, insbesondere über Richtfunkstrecken, Digitalsignalgeräte eingesetzt. Solche Geräte erfordern für die zusätzliche Übertragung von Informationsbits für Dienstkanal- und Meldezwecke eine Multiplexer-Demultiplexereinrichtung mit einer sogenannten Überrahmenstruktur.

In der Druckschrift "Multiplexer für 8,448 Mbit/s bei positiv-negativ Stopftechnik" von U. Aßmus und anderen (siehe Mitteilung aus dem Forschungsinstitut des FTZ der Deutschen Bundespost in Darmstadt, veröffentlicht in Nachrichtentechnische Fachberichte 42 (1972), S. 245-256) wird folgendes ausgeführt. Die Zusammenfassung mehrerer PCM-Grundsysteme zu einem System zweiter Ordnung für die wirtschaftlichere Übertragung von Digitalsignalen über größere Entfernungen wird als Vorstufe eines digitalen Netzes sinnvoll sein und kann ohne Übertragungsverluste durch Multiplexer gelöst werden. Da in naher Zukunft mit einem synchronen digitalen Netz nicht gerechnet werden kann, dürfte der asynchrone Multiplexer für eine längere Übergangszeit von Bedeutung sein. Der Multiplexer mit "positiv-negativ" Stopftechnik scheint unter den asynchronen Multiplexern eine besondere Bedeutung zu haben. Im Empfangsteil des Systems Multiplexer-Demultiplexer wird in einer Synchronisiereinrichtung der Gleichlauf zwischen Sender und Empfänger hergestellt. Hierzu wird in allgemein üblicher Weise im Bitstrom ein periodisch wiederkehrendes Synchronisierwort übertragen. Durch das Synchronisierwort erhält der Bitstrom eine Rahmenstruktur, wobei der Beginn jedes Rahmens durch das Synchronisierwort markiert ist.

Wie in der Beschreibung zum Digitalsignal-Multiplexgerät DSMX8/34 der Firma Siemens ausgeführt, wird hier am Anfang des Pulsrahmens ein Rahmenkennungswort bestehend aus 10 Bits verwendet. In der Rahmensynchronisierschaltung wird ein Schieberegister relativ zum Bitstrom solange verschoben, bis über eine Verknüpfungslogik an den Ausgängen des Schieberegisters das Rahmenkennungswort erkannt wird.

Der Erfindung liegt die Aufgabe zugrunde, bei einem Digital-Richtfunkgerät ein Verfahren zur Rahmendekodierung anzugeben, das auch bei auftretenden sogenannten Büschel-Störungen auf der Übertragungsstrecke eine schnelle und sichere Synchronisation des Empfangsgerätes ermöglicht.

Diese Aufgabe wird erfindungsgemäß durch die im Anspruch 1 angegebenen Merkmale gelöst.

Zyklische Pulsstörungen können totale Ausfälle ganzer Netzteile bewirken. Die Auswirkungen solcher Störungen sind bei postalischen Netzen nicht so gravierend, da eine Neusynchronisation in ca. 1-2 ms erfolgt. Bei verschlüsselter Übertragung dauert dagegen eine Neusynchronisation der Schlüsselgeräte ca. 50-100 ms.

Durch das erfindungsgemäße Verfahren ist die Störsicherheit verbessert, da ein Bit als Synchronisierinformation weniger oft verfälscht wird als ein Rahmenkennungswort.

Dadurch, daß die erfindungsgemäße Schaltungsanordnung während des Suchvorganges und/oder Ausbleiben des Synchronisierbits kein neues Synchronisiersignal erzeugt, sondern das neue Synchronisiersignal erst nach einer vorbestimmten Anzahl von richtig erkannten Synchronisierbits abgegeben wird, ist die Störsicherheit gegen Falschsynchronisation verbessert. Während des Suchvorganges insbesondere bei Störeinwirkung wird das einmal erzeugte Synchronisiersignal unverändert weiter abgegeben.

Im folgenden wird die Erfindung anhand eines in der Zeichnung dargestellten Ausführungsbeispieles näher beschrieben. Dabei zeigen

Fig. 1 ein Blockschaltbild der Schaltungsanordnung zur Rahmendekodierung,

Fig. 2 die Schaltungsanordnung zur Rahmendekodierung, und

Fig. 3 und 4 Impulsdiagramme zur Erläuterung der Schaltungsanordnung zur Rahmendekodierung.

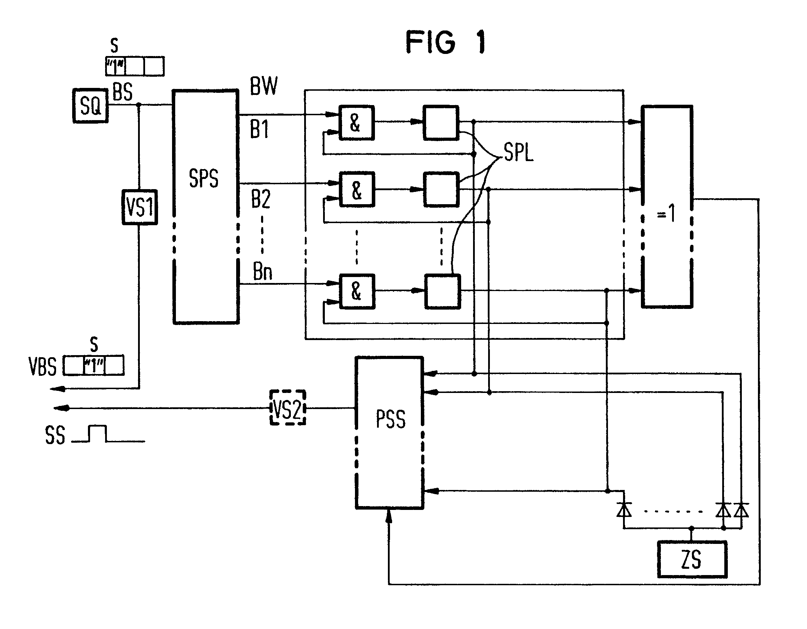

In Fig. 1 ist eine Signalquelle SQ dargestellt, die einen Bitstrom BS an eine Seriell-Parallelwandlerstufe SPS gibt. Die Signalquelle SQ kann hierbei beispielsweise das Empfangsteil eines Demultiplexers sein. Die Seriell-Parallelwandlerstufe SPS erzeugt aus dem seriellen Bitstrom BS ein paralleles Bitwort BW, das aus Bits B1, B2, Bn besteht.

Die Bits B1 bis Bn liegen jeweils an den einen Eingängen von nicht näher bezeichneten UND-Verknüpfungsgliedern an. Die Ausgänge der UND-Verknüpfungsglieder sind mit Speicherplätzen SPL verbunden. Die Speicherplätze SPL können beispielsweise Bestandteil eines Schreib-Lesespeichers sein. Die Ausgänge der Speicherplätze SPL sind mit Eingängen eines nicht näher bezeichneten Exklusiv-ODER-Verknüpfungsgliedes, mit Eingängen einer Parallel-Seriellwandlerstufe PSS, und jeweils mit einem anderen Eingang der zugeordneten UND-Verknüpfungsglieder verbunden. Der Anschluß einer Zeitschaltstufe ZS ist über entkoppelnde Dioden mit den anderen Eingängen der UND-Verknüpfungsglieder verbunden.

Zu Beginn des Dekodierungsvorganges werden von der Zeitschaltstufe ZS die anderen Eingänge der UND-Verknüpfungsglieder mit einer logischen "1" beaufschlagt, so daß die Bits B1, B2,.. Bn, d.h. das von der Seriell-Parallelwandlerstufe SPS abgegebene Bitwort BW in die Speicherplätze SPL eingeschrieben wird. Während des Dekodierungsvorganges werden die Bits B1 bis Bn des m-ten Bitwortes BW in den Speicherplätzen SPL mit den Bits B1 bis Bn des nachfolgenden (m + 1)ten Bitwortes BW über die UND-Verknüpfungsglieder verknüpft. Der Erfindung liegt der Gedanke zugrunde, daß die auf logisch "0" gesetzten Bits des m-ten Bitwortes BW in den Speicherplätzen SPL die entsprechenden Bits des (m + 1)-ten Bitwortes BW auf logisch "0" setzen, und diese auf logisch "0" gesetzten Bits des (m + 1)-ten Bitwortes BW in die Speicherplätze SPL geschrieben werden. Logische Einsen auf Bits des m-ten Bitwortes in den Speicherplätzen SPL werden von logischen Nullen der entsprechenden Bits des (m + 1)-ten Bitwortes BW überschrieben.

Das Ergebnis, das an den Ausgängen der UND-Verknüpfungsglieder abnehmbar ist, wird laufend in die Speicherplätze SPL eingeschrieben. Während des Dekodierungsvorganges bleibt also nur dasjenige der Bits B1 bis Bn des Bitwortes BW in den Speicherplätzen SPL auf logisch "1" gesetzt, das auch am Ausgang der Seriell-Parallelwandlerstufe SPS immer eine logische "1" aufweist. Dieses Bit ist das Synchronisierbit S, das definitionsgemäß durch eine periodisch wiederkehrende logische "1" im Bitstrom BS realisiert ist.

Wenn in einem Bitwort BW in den Speicherplätzen SPL nur noch eines der Bits B1 bis Bn eine logische "1" aufweist, dann gibt das Exklusiv-ODER-Verknüpfungsglied ein Signal an einen nicht näher bezeichneten Schalteingang der Parallel-Seriellwandlerstufe PSS. Diese wandelt das in den Speicherplätzen SPL stehende Bitwort BW in eine serielle Bitfolge um. Diese Bitfolge ist ein Synchronisiersignal SS. Der Bitstrom BS wird in einer ersten Verzögerungsstufe VS1 in einen verzögerten Bitstrom VBS zur zeitlichen Anpassung an das Synchronisiersignal SS umgewandelt. Die Verzögerungszeit der ersten Verzögerungsstufe VS1, und/oder die Verzögerungszeit einer zweiten Verzögerungsstufe VS2, die für eine Verzögerung des Synchronisiersignals SS sorgt, sind so gewählt, daß das Synchronisierbit S im verzögerten Bitstrom VBS gleichzeitig mit dem Synchronisiersignal SS auftritt.

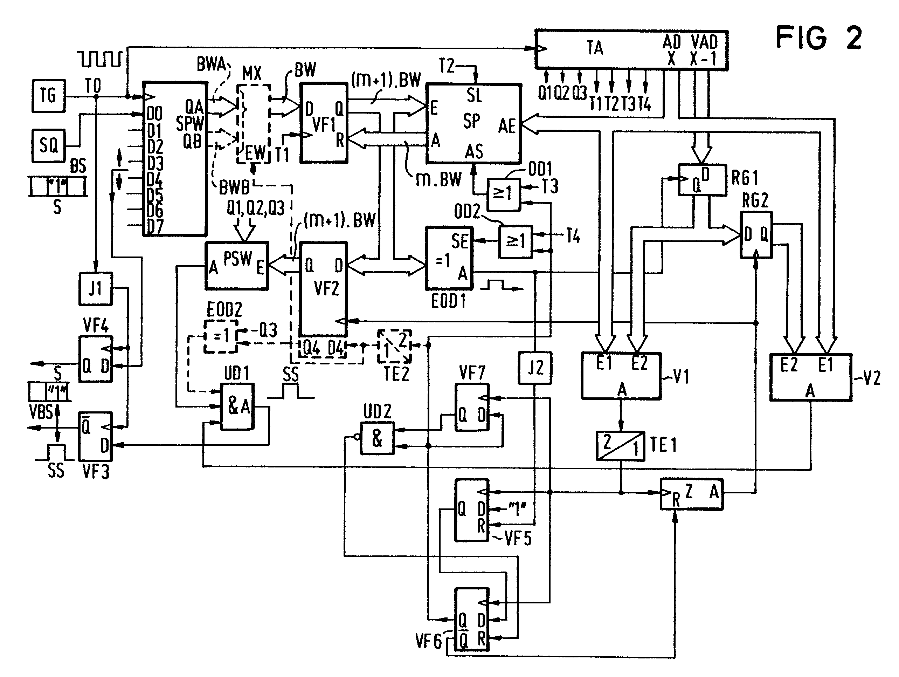

In Fig. 2 ist wiederum die aus Fig. 1 bekannte Signalquelle SQ dargestellt, die den ebenfalls bekannten Bitstrom BS mit dem Synchronisierbit S an einen Eingang D0 eines Seriell-Parallelwandlers SPW gibt. Ein Taktgeber TG gibt eine Taktimpulsfolge T0 an die Takteingänge des Seriell-Parallelwandlers SPW und einer Takt-und Adreßaufbereitungsstufe TA. Die Takt- und Adreßaufbereitungsstufe TA gibt erste bis dritte Taktansteuerungsimpulse Q1, Q2, Q3, erste bis vierte Taktimpulsfolgen T1, T2, T3, T4, sowie zyklisch eine Adresse AD und eine vorhergehende Adresse VAD ab. Die Taktansteuerungsimpulse Q1 bis Q3 weisen jeweils gegenüber den vorhergehenden Taktansteuerungsimpulsen die halbe Frequenz auf, wobei die ersten Taktansteuerungsimpulse Q1 die halbe Frequenz aufweisen, wie die Taktimpulsfolge T0.

Im Seriell-Parallelwandler SPW, der beispielsweise durch ein achtstufiges Schieberegister realisiert ist, wird der serielle Bitstrom PS kontinuierlich in 8-Bit breite Bitworte BW zerlegt. Es wird hierbei davon ausgegangen, daß die Rahmenlänge im Bitstrom BS, d.h. die Anzahl der Bits zwischen zwei Synchronisierbits S plus das Synchronisierbit S ein Vielfaches von acht ist.

Dieses 8-Bit breite Bitwort BW wird von einem Ausgang QA des Seriell-Parallelwandlers SPW abgegeben, und liegt an einem Eingang D eines ersten Verzögerungs-Flip-Flops VF1 an. Am Takteingang des ersten Verzögerungs-Flip-Flops VF1 liegt die erste Taktimpulsfolge T1 an. Ein Ausgang Q des ersten Verzögerungs-Flip-Flops VF1 gibt ein (m + 1)-tes Bitwort BW an einen Eingang E eines Speicherbaustein SP, an einen Eingang D eines zweiten Verzögerungs-Flip-Flops VF2, sowie an einen nicht näher bezeichneten Eingang eines Exklusiv-ODER-Verknüpfungsgliedes EOD1. An einem Steuereingang SE des Exklusiv-ODER-Verknüpfungsgliedes EOD1 liegt über ein zweites ODER-Verknüpfungsglied OD2 die vierte Taktimpulsfolge T4 an.

An einem Rücksetzimpulseingng R des ersten Verzögerungs-Flip-Flops VF1 liegt das von einem Ausgang A des Speicherbausteins SP abgegebene m-te Bitwort BW an. An einem Schreib- Lesebefehleingang SL des Speicherbausteins SP liegt die zweite Taktimpulsfolge T2 an. Der Speicherbaustein SP, der die aus Fig. 1 bekannten Speicherplätze SPL beinhaltet, ist beispielsweise durch einen sogenannten RAM-Baustein realisiert. An einem Ausgabesteuereingang AS des Speicherbausteins SP liegt über ein erstes ODER-Verknüpfungsglied OD1 die dritte Taktimpulsfolge T3 an.

Die von der Takt- und Adreßaufbereitungsstufe TA abgegebene Adresse AD liegt an einem Adreßeingang AE des Speicherbausteins SP, an einem ersten Eingang E1 einer ersten Vergleicherstufe V1, und an einem ersten Eingang E1 einer zweiten Vergleicherstufe V2 an. Die vorhergehende Adresse VAD liegt an einem Eingang D eines ersten Registers RG1 an, dessen Takteingang mit einem Ausgang A des Exklusiv-ODER-Verknüpfungsgliedes EOD1 verbunden ist. Ein Ausgang Q gibt den Inhalt des ersten Registers RG1 an einen zweiten Eingang E2 der ersten Vergleicherstufe V1 und an einen Eingang D eines zweiten Registers RG2. Ein Ausgang Q gibt den Inhalt des zweiten Registers RG2 an einen zweiten Eingang E2 der zweiten Vergleicherstufe V2. Die Vergleicherstufen V1 und V2 geben an ihren Ausgängen jeweils einen Impuls ab, wenn an ihren ersten und zweiten Eingängen E1, E2 jeweils die gleichen Adressen anliegen.

Der Ausgang A der ersten Vergleicherstufe V1 ist über eine Teilerstufe TE, die beispielsweise ein Teilverhältnis von 2 zu 1 aufweist, mit Takteingängen eines Zählers Z, eines fünften, eines sechsten, und eines siebenten Verzögerungs-Flip-Flops VF5, VF6, VF7 verbunden. Ein Ausgang A des Zählers Z, der nach einer vorbestimmten Anzahl von Impulsen am Takteingng ein Signal abgibt, ist mit Takteingängen des zweiten Registers RG2 und des zweiten Verzögerungs Flip-Flops VF2, verbunden. Ein Rücksetzimpulseingang R des fünften Verzögerungs-Flip-Flops VF5 ist über einen zweiten Inverter I2 mit dem Ausgang A des Exklusiv-ODER-Verknüpfungsgliedes EOD1 verbunden.

Ein Ausgang Q des zweiten Verzögerungs-Flip-Flops VF2 gibt das (m + 1)-te Bitwort BW an einen Eingang E eines Parallel-Seriellwandlers PSW, an dessen nicht näher bezeichneten Steuereingängen die Taktansteuerimpulse Q1 bis Q3 anliegen. Ein Ausgang A des Parallel-Seriellwandlers PSW ist mit einem Eingang eines UND-Verknüpfungsgliedes UD1 verbunden, an dessen anderen Eingang der Ausgang A der zweiten Vergleicherstufe V2 angeschaltet ist.

Die vom Taktgeber TG abgegebene Taktimpulsfolge TO liegt über einen ersten Inverter I1 an den Takteingängen eines dritten und eines vierten Verzögerungs-Flip-Flops VF3, VF4 an. Das dritte Verzögerungs-Flip-Flop VF3 weist einen Eingang D auf, an dem ein Ausgang A des UND-Verknüpfungsgliedes UD1 angeschaltet ist, und einen invertierenden Ausgang $\overline{Q}$, von dem das Synchronisiersignal SS abgegeben wird. Das vierte Verzögerungs-Flip-Flop VF4 weist einen Eingang D auf, der mit einem der Eingänge D1 bis D7 des Seriell-Parallelwandlers SPW verbindbar ist, und einen Ausgang Q, von dem der verzögerte Bitstrom VBS abgegeben wird. Die Eingänge D1 bis D7 des Seriell-Parallelwandlers SPW sind hierbei die höherwertigen sieben Eingänge des achtstufigen Schieberegisters, bzw. die niederwertigen sieben Ausgänge der einzelnen Stufen.

Das fünfte Verzögerungs-Flip-Flop VF5 weist einen Eingang D auf, an dem eine logische "1" anliegt, und einen Ausgang Q, der mit einem Eingang D des sechsten Verzögerungs-Flip-Flops VF6 verbunden ist. Ein Ausgang Q des sechsten Verzögerungs-Flip-Flops VF6 ist mit einem Eingang eines invertierenden UND-Verknüpfungsgliedes UD2, mit einem Eingang des ersten ODER-Verknüpfungsgliedes OD1, und mit einem Eingang des zweiten ODER-Verknüpfungsgliedes OD2 verbunden. Ein invertierter Ausgang $\overline{Q}$ des sechsten Verzögerungs Flip-Flops VF6 ist mit einem Rücksetzimpulseingang R der Zählerstufe Z verbunden.

Am anderen Eingang des ersten ODER-Verknüpfungsgliedes OD1, dessen Ausgang mit dem Ausgabesteuereingang AS des Speicherbausteins SP verbunden ist, liegt die dritte Taktimpulsfolge T3 an. Am anderen Eingang des zweiten ODER-Verknüpfungsgliedes OD2, dessen Ausgang mit einem Steuereingang SE des Exklusiv ODER-Verknüpfungsgliedes EOD1 verbunden ist, liegt die vierte Taktimpulsfolge T4 an. Durch eine logische "1" an den einen Eingängen der ODER-Verknüpfungsglieder OD1 und OD2 kann die dritte bzw. vierte Taktimpulsfolge T3, T4 ausgeblendet werden.

Der Ausgang Q des sechsten Verzögerungs-Flip-Flops VF6 liegt weiter an einem Eingang D des siebten Verzögerungs-Flip-Flops VF 7 an, dessen Ausgang Q am anderen Eingang des invertierenden UND-Verknüpfungsgliedes UD2 anliegt. Der Ausgang des invertierenden UND-Verknüpfungsgliedes UD2 ist an einem Rücksetzimpulseingang R des sechsten Verzögerungs-Flip-Flops VF6 angeschaltet.

Alle Takteingänge der in Fig. 2 dargestelleten Bausteine werden mit einer ansteigenden Flanke getriggert. Die Rücksetzimpulseingänge R der Verzögerungs-Flip-Flops VF1 bis VF7 und der Steuereingang SE des Exklusiv-ODER-Verknüpfungsgliedes EOD1 sind bei einer logischen "0" aktiv. Durch eine logische "0" am Ausgabesteuereingang AS des Speicherbausteins SP wird an dessen Ausgang A das m-te Bitwort BW abgegeben. Bei einer logischen "1" am Ausgabesteuereingang AS ist der Ausgang A hochohmig geschaltet, d.h. die Ausgabe von Daten ist gesperrt.

Die mit unterbrochenen Linien in der Fig. 2 dargestellten Schaltungsteile werden später beschrieben.

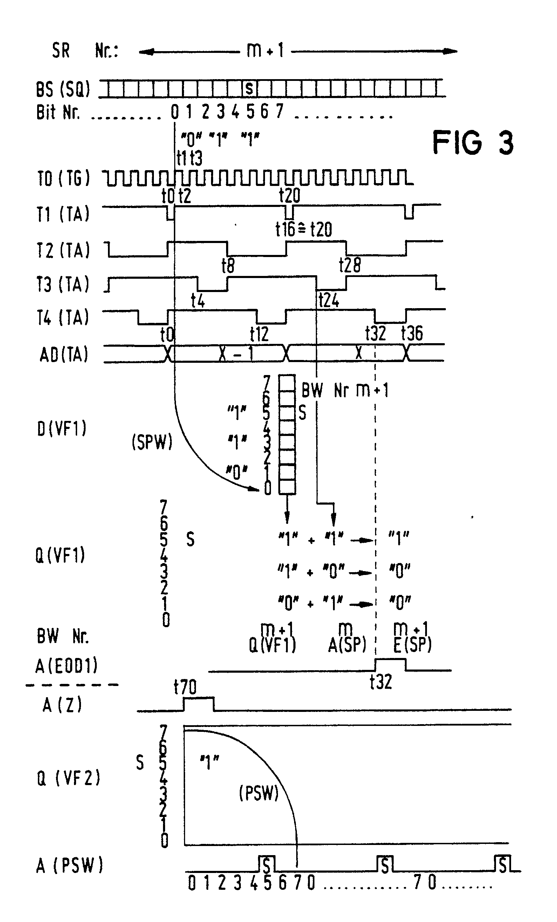

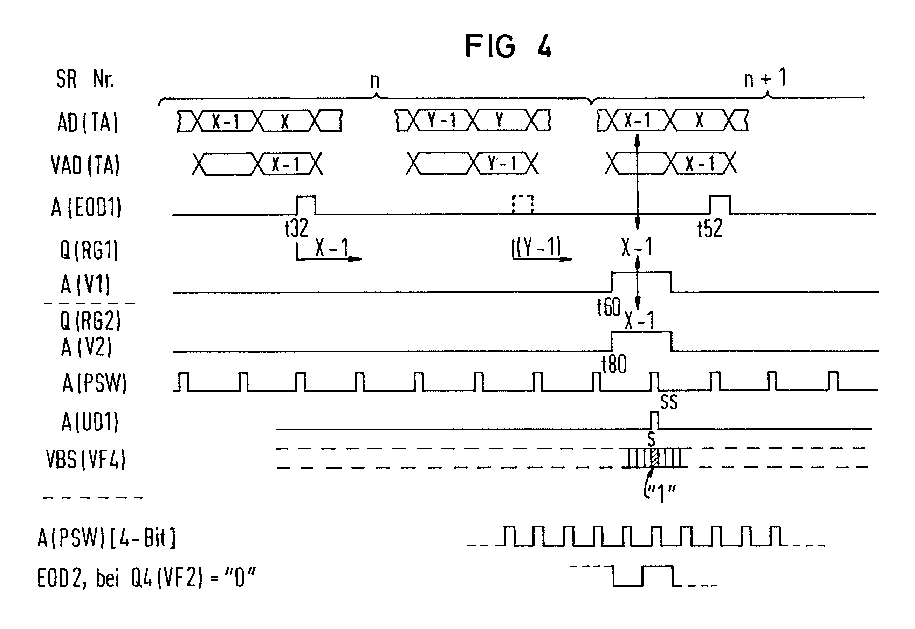

In den Figuren 3 und 4 sind Impulse bzw. Zustände an einigen Anschlüssen, der in Fig. 2 dargestellten Bausteine dargestellt. Hierbei sind in jeder Zeile der Anschluß bzw. das auf der zugehörigen Leitung liegende Signal, und in Klammern der zugehörige Baustein angegeben.

Im folgenden wird die Wirkungsweise der in Fig. 2 dargestellten Schaltungsanordnung zur Dekodierung unter Bezugnahme auf die in Fig. 3 und 4 dargestellten Signale erläutert.

Von der Signalquelle SQ wird ein serieller Bitstrom BS abgegeben. Der Bitstrom BS weist an einer Stelle das Synchronisierbit S auf, durch das der Beginn eines Rahmens gekennzeichnet ist. In der Fig. 3 befindet sich das Synchronisierbit S innerhalb eines (m + 1)-ten Suchrahmens SR. Der Suchrahmen SR enthält genauso viele Bits wie der Rahmen, beispielsweise 1080 Bits. Der Beginn des Suchrahmens SR ist willkürlich durch den Einschaltzeitpunkt der Schaltungsanordnung zur Rahmendekodierung bestimmt.

Der Bitstrom BS wird vom Seriell-Parallelwandler SPW in 8-Bit breite Bitworte BW umgewandelt. Zur Erläuterung sind in Fig. 3 acht aufeinander folgende Bits mit den Nummern 0 bis 7 gekennzeichnet. Es wird angenommen, daß das Bit Nr. 1 mit einer logischen "0" und die Bits Nr. 3 und 5, wobei das Bit Nr. 5 das Synchronisierbit S ist, jeweils mit einer logischen "1" besetzt sind.

Vom Taktgeber TG wird die Taktimpulsfolge T0 abgegeben. Aufeinander folgende Taktflanken der Taktimpulsfolge T0 sind mit periodischen Zeitpunkten t0 bis t16 gekennzeichnet. Der Zeitpunkt t16 entspricht hierbei dem Zeitpunkt t20 der nächsten Periode. Das Bit Nr. 0 wird zum Zeitpunkt t1 mit einer ansteigenden Flanke der Taktimpulsfolge T0 abgetastet.

Von der Takt- und Adreßaufbereitungsstufe TA werden die Taktimpulsfolgen T1 bis T4 abgegeben. Die erste Taktimpulsfolge T1 weist zwischen den Zeitpunkten t0 und t1 eine logische "0" auf, sonst eine logische "1". Die zweite Taktimpulsfolge T2 weist zwischen den Zeitpunkten t0 und t8 eine logische "1", und zwischen den Zeitpunkte t8 und t16 eine logische "0" auf. Die dritte Taktimpulsfolge T3 weist zwischen den Zeitpunkten t4 und t8 eine logische "0", und zwischen den Zeitpunkte t8 und t24 eine logische "1" auf. Die vierte Taktimpulsfolge weist zwischen den Zeitpunkten t0 und t12 eine logische "1", und zwischen den Zeitpunkten t12 und t16 eine logische "0" auf. Die Form der Taktimpulsfolgen T1 bis T4 wiederholt sich periodisch.

Die Adresse AD wird von der Takt- und Adreßaufbereitungsstufe TA abgegeben. Die Änderung der Adresse AD erfolgt jeweils zu den Zeitpunkten t0 und t16 bzw. t20. Zwischen den Zeitpunkten t0 und t16 wird die Adresse AD = x-1, und zwischen den Zeitpunkten t20 und t36 die Adresse AD = x abgegeben. In dem erwähnten Fall mit 1080 Bits im Rahmen werden 135 Adressen AD (1080:8 = 135) von AD = 0 bis AD = 134 abgegeben, die zyklisch von der Takt- und Adreßaufbereitungsstufe TA gebildet werden.

Das vom Seriell-Parallelwandler SPW abgegebene Bitwort BW liegt am Eingang D des ersten Verzögerungs-Flip-Flops VF1 an. Die Bits des Bitstromes BS mit den Nummern 0 bis 7 sind hierbei in dem Bitwort BW mit der Nr. m + 1 enthalten. Die Nummer des Bitwortes BW bezieht sich hierbei auf die Nummer des Suchrahmens SR, die einander gleich sind. Das m-te Bitwort BW befindet sich an der gleichen Stelle im m-ten Suchrahmen SR, wie das (m + 1)-te Bitwort BW im (m + 1)-ten Suchrahmen SR. Diese Stellen sind durch die Adressen AD markiert.

Ab dem Zeitpunkt t21 ist dieses Bitwort BW mit der Nr. m + 1 am Ausgang Q des ersten VerzögerungsFlip-Flops VF1 abgreifbar. Ab dem Zeitpunkt t20 liegt am Adreßeingang AE des Speicherbausteins SP die Adresse AD = x an. Ebenfalls ab dem Zeitpunkt t20 liegt am Schreib-Lesebefehlseingang SL des Speicherbausteins SP eine logische "1" von der zweiten Taktimpulsfolge T2 an, wodurch der Speicherbaustein SB zum Auslesen von Daten vorbereitet wird. Es wird hierbei ein Zustand betrachtet, bei dem ab dem Zeitpunkt t24 am Äusgabesteuereingang AS des Speicherbausteins SP eine logische "0" von der dritten Taktimpulsfolge T3 anliegt, d.h. das erste ODER-Verknüpfungsglied OD1 schaltet die dritte Taktimpulsfolge T3 unverändert durch. Hierdurch wird bewirkt, daß ab dem Zeitpunkt t24 das durch die Adresse AD = x adressierte Bitwort BW am Ausgang A des Speicherbausteins SP abgreifbar ist. In der Figur 3 hat dieses Bitwort BW die Nummer m.

Das m-te Bitwort BW liegt also ab dem Zeitpunkt t24 am Rücksetzimpulseingang R des ersten Verzögerungs-Flip-Flops VF1 an. Hierdurch wird bewirkt, daß im am Ausgang Q des ersten Verzögerungs-Flip-Flops VF1 abgreifbaren (m + 1)-ten Bitwort BW nur die Bits nicht auf logisch "0" gesetzt werden, an deren Stelle im m-ten Bitwort BW eine logische "1" steht. Wie schon bei der Beschreibung des Grundprinzips der Erfindung anhand von Fig. 1 erläutert, findet eine logische UND-Verknüpfung (Konjunktion) des m-ten Bitwortes BW mit dem (m + 1)-ten statt.

Nach der logischen UND-Verknüpfung wird das Ergebnis als (m + 1)-tes Bitwort BW in den Speicherplatz mit der Adresse AD = x eingeschrieben. Dies wird bewirkt durch die logische "0" der zweiten Taktimpulsfolge T2 ab dem Zeitpunkt t28 am Schreib-Lesebefehlseingang SL, und die immer noch am Adreßeingang AE anliegende Adresse AD = x.

Die logische UND-Verknüpfung des m-ten mit dem (zeitlich) nachfolgenden (m + 1)-ten Bitwort BW wird analog für alle Bitworte BW für die Adressen AD = 0 bis AD = 134 durchgeführt. Auf diese Weise wird in dem ganzen Suchrahmen SR nach dem Synchronisierbit S gesucht, das als einziges Bit immer eine logische "1" aufweist.

Das zum Zeitpunkt t28 in den Speicherbaustein SP eingeschriebene (m + 1)-te Bitwort BW liegt auch an den Eingängen des Exklusiv-ODER-Verknüpfungsgliedes EOD1 an. Wenn, wie bei dem in Fig. 3 gewählten Zahlenbeispiel, das (m + 1)-te Bitwort BW nur noch ein mit einer logischen "1" besetztes Bit aufweist (siehe Bit-Nr. 5, das Synchronisierbit S in Fig. 3), dann wird vom Ausgang A des Exklusiv-ODER-Verknüpfungsgliedes EOD1 ein positiver Impuls abgegeben. Die ansteigende Flanke dieses Impulses zu einem Zeitpunkt t32, ist durch die am Steuereingang SE des Exklusiv-ODER-Verknüpfungsgliedes EOD1 anliegende vierte Taktimpulsfolge T4 bestimmt, die ab diesem Zeitpunkt t32 eine logische "0" aufweist. Es wird hierbei ein Zustand betrachtet, bei dem das zweite ODER-Verknüpfungsglied OD2 die vierte Taktimpulsfolge T4 unverändert durchschaltet.

Mit Hilfe des Exklusiv-ODER-Verknüpfungsgliedes EOD1 wurde festgestellt, daß in einem der Bitworte BW nur noch ein Bitplatz mit einer logischen "1" besetzt ist. Es muß nun noch festgestellt werden, ob das (m + 1)-te Bitwort BW das einzige Bitwort BW innerhalb eines Suchrahmens SR ist, das einen mit einer logischen "1" besetzten Bitplatz aufweist. Dies wird mit Hilfe des ersten Registers RG1 und der ersten Vergleicherstufe V1 unter Verwendung der vorhergehenden Adresse VAD festgestellt.

Wie in Fig. 4 dargestellt, werden innerhalb eines Suchrahmens SR von der Takt- und Adreßaufbereitungsstufe TA nebeneinander die Adresse AD = x bzw. y und die vorhergehende Adresse VAD = x-1 bzw. y-1 abgegeben. Die vom Ausgang A des Exklusiv-ODER-Verknüpfungsgliedes EOD1 den Zeitpunkten t32 und t52 abgegebenen positiven Impulse bewirken, daß die vorhergehende Adresse VAD = x-1 zu diesen Zeitpunkten t32, t52 in das erste Register RG1 übernommen wird. Ab dem Zeitpunkt t32 ist daher am Ausgang Q des ersten Registers RG1 die vorhergehende Adresse VAD = x-1 abgreifbar.

In einem ersten Fall, in dem das (m + 1)-te Bitwort BW mit der Adresse AD = x im Suchrahmen SR mit der Nr. n das einzige Bitwort mit einem nur mit einer logischen "1" besetzten Bitplatz ist, liegen ab einem Zeitpunkt t60 an der ersten Vergleicherstufe V1 zwei gleiche Adressen an. An ihrem ersten Eingang E1 die Adresse AD = x-1 von der Takt- und Adreßaufbereitungsstufe TA, und an ihrem zweiten Eingang E2 die vorhergehende Adresse VAD = x-1 vom Ausgang Q des ersten Registers RG1. Hierdurch wird bewirkt, daß die erste Vergleicherstufe V1 an ihren Ausgang A einen postitiven Impuls abgibt, der bis zum nächsten Adreßwechsel andauert. Es wird darauf hingewiesen, daß als vorhergehende Adresse VAD jede vor der Adresse AD = x liegende Adresse verwendet werden kann. Zur Anpassung des Synchronisiersignals SS an den verzögerten Bitstrom VBS ist die direkt vor der Adresse AD = x liegende vorhergehende Adresse VAD = x-1 besonders gut geeignet. Es ist auch denkbar, als vorhergehende Adresse VAD eine nach der Adresse AD = x liegende Adresse zu verwenden.

In einem zweiten Fall, in dem das (m + 1)-te Bitwort BW mit der Adresse AD = x im Suchrahmen mit der Nr. n nicht das einzige Bitwort BW mit nur einem mit einer logischen "1" besetzten Bitplatz ist, wird beispielsweise zu einem nicht näher bezeichneten Zeitpunkt die vorhergehende Adresse VAD = y-1 in das erste Register RG1 übernommen. In diesem Fall wurde noch ein (m + 1)-tes Bitwort BW mit nur einer logischen "1" gefunden. Dieses Bitwort BW gehört zur Adresse AD = y. Da während der Zeitspanne, in der am ersten Eingang E1 der ersten Vergleicherstufe V1 die von der Takt- und Adreßaufbereitungsstufe TA abgegebene Adresse AD = x-1 anliegt, am zweiten Eingang E2 der ersten Vergleicherstufe V1 die vorhergehende Adresse VAD = y-1 anliegt, gibt die erste Vergleicherstufe V1 an ihren Ausgang A keinen Impuls ab. Das gleiche gilt für die Zeitspanne, während der am ersten Eingang E1 der ersten Vergleicherstufe V1 die von der Takt- und Adreßaufbereitungsstufe TA abgegebene Adresse AD = y-1 und an deren zweiten Eingang E2 die im ersten Register RG1 stehende vorhergehende Adresse VAD = x-1 anliegen.

Die vom Ausgang A der ersten Vergleicherstufe V1 abgegebenen Impulse werden in einer Teilerstufe TE beispielsweise im Verhältnis 2 zu 1 heruntergeteilt, und an den Takteingang des Zählers Z gegeben. Nach beispielsweise dreißig Impulsen am Ausgang A der ersten Vergleicherstufe V1, d.h. nach fünfzehn Impulsen am Takteingang des Zählers Z, gibt der Zähler Z an seinen Ausgang A einen Impuls ab, durch den der Takteingang des zweiten Registers RG2 getriggert wird. Mit diesem Impuls wird die am Ausgang Q des ersten Registers RG1 abgreifbare vorhergehende VAD in das zweite Register RG2 übernommen. Nach diesem Impuls wird also vom Ausgang Q des zweiten Registers RG2 die vorhergehende Adresse VAD an den zweiten Eingang E2 der zweiten Vergleicherstufe V2 gelegt.

Der Zähler Z dient zur Erhöhung der Störsicherheit der erfindungsgemäßen Schaltungsanordnung zur Rahmendekodierung. Erst nach einem mehrmaligen Erkennen eines einzigen mit einer logischen "1" besetzten Bits in einem Bitwort BW, und nach dem Erkennen eines einzigen solchen Bitwortes BW in einem Suchrahmen SR, wird dieses Bit als Synchronisierbit S identifiziert.

Ab einem Zeitpunkt t80 liegt am ersten Eingang E1 der zweiten Vergleicherstufe V2 die von der Takt- und Adreßaufbereitungsstufe TA abgegebene Adresse AD = x-1, und am zweiten Eingang der zweiten Vergleicherstufe V2 die im zweiten Register R2 gespeicherte vorhergehende Adresse VAD = x-1 an. Ab dem Zeitpunkt t80 gibt also die zweite Vergleicherstufe V2 an ihrem Ausgang A einen positiven Impuls ab. Dieser Impuls dauert bis zum nächsten Adreßwechsel.

Im folgenden wird zur Erläuterung der in Fig. 2 dargestellten Schaltungsanordnung noch einmal auf die Fig. 3 zurückgegriffen. Zu einem Zeitpunkt t70 wird vom Ausgang A des Zählers Z ein positiver Impuls abgegeben. Dieser Impuls liegt auch am Takteingang des zweiten Verzögerungs-Flip-Flops VF2 an, das zu diesem Zeitpunkt das (m + 1)-te Bitwort BW übernimmt. Dieses Bitwort BW wird vom Ausgang Q des zweiten Verzögerungs-Flip-Flops VF2 an den Eingang E des Parallel-Seriellwandlers PSW gegeben. Der Parallel-Seriellwandler PSW bildet nun aus den Bits mit den Nummern 0 bis 7, wobei das Bit Nr. 5 das Synchronisierbit S ist, eine serielle Bitfolge der Bits mit den Nummern 0 bis 7. Diese Bitfolge, die durch einen positiven, dem Synchronisierbit S entsprechenden Impuls gekennzeichnet ist, wird vom Ausgang A des Parallel-Seriellwandlers PSW periodisch an das UND-Verknüpfungsglied UD1 gegeben.

Die vom Ausgang A des Parallel-Seriellwwandlers PSW abgegebene Bitfolge ist nochmals in Fig. 4 dargestellt.
Durch den ebenfalls am UND-Verknüpfungsglied UD1 anliegenden, vom Ausgang A der zweiten Vergleicherstufe V2 abgegebenen Impuls ist ein Zeitfenster vorgegeben.

Durch dieses Zeitfenster wird einer der periodischen am Ausgang A des Parallel-Serienwandlers PSW abgreifbaren Impulse ausgewählt, der am Ausgang A des UND-Verknüpfungsgliedes UD1 als Synchronisiersignal SS abgreifbar ist.

Über das vierte Verzögerungs Flip-Flop VF4 wird der verzögerte Bitstrom VBS erzeugt. Die Zeitspanne, um die der verzögerte Bitstrom VBS gegenüber dem Bitstrom BS verzögert ist, ist einerseits durch die Wahl der Zeitdifferenz zwischen der Abgabe der Adresse AD und der vorhergehenden Adresse VAD durch die Takt- und Adreßaufbereitungsstufe TA, und andererseits durch den wahlweisen Anschluß des Eingangs D des vierten Verzögerungs-Flip-Flops VF4 an einen der Eingänge D1-D7 des Seriell-Parallelwandlers SPW einstellbar. Das vierte Verzögerungs-Flip-Flop VF4 wird hierzu durch die abfallenden Flanken der Taktimfolge T0 getriggert.

Ebenfalls von den abfallenden Flanken der Taktimpulsfolge T0 wird das dritte Verzögerungs-Flip-Flop VF3 getriggert. Über das dritte Verzögerungs-Flip-Flop VF3 wird das vom Ausgang A des UND-Verknüpfungsgliedes UD1 abgegebene Synchronisiersignal SS auf die abfallenden Flanken der Taktimpulsfolge T0 synchronisiert, und ist damit synchron zu den Synchroinisierbits S im verzögerten Bitstrom VBS.

Im folgenden wird der Beginn der Rahmendekodierung sowie das Verhalten der erfindungsgemäßen Schaltungsanordnung bei Verlust des Synchronisierbits S, beispielsweise durch Störung, beschrieben.

Nach dem Anschalten der erfindungsgemäßen Schaltungsanordnung zur Rahmendekodierung an eine Stromversorgung steht im ersten Register RG1 eine zufällig übernommene vorhergehende Adresse VAD = x-1. Wenn von der Takt- und Adreßaufbereitungsstufe TA die Adresse AD = x-1 abgegeben wird, wird vom Ausgang A der ersten Vergleicherstufe V1 ein Impuls abgegeben. Nach jedem solchen zweiten Impuls, aufgrund der im Verhältnis 2 zu 1 arbeitenden Teilerstufe TE, wird die am Eingang D des fünften Verzögerungs-Flip-Flops VF5 anliegende logische "1" zu dessen Ausgang Q durchgeschaltet. Diese logische "1" liegt jetzt am Eingang D des sechsten Verzögerungs-Flip-Flops VF6 an. Nach weiteren zwei Impulsen am Ausgang A der ersten Vergleicherstufe V1 wird diese logische "1" zum Ausgang Q des sechsten Verzögerungs-Flip-Flops VF6 durchgeschaltet. Durch die am Ausgang Q des sechsten Verzögerungs-Flip-Flops VF6 abgreifbare logische "1", die an den einen Eingängen der ODER-Verknüpfungsglieder OD1 und OD2 anliegt, sind die dritte Taktimpulsfolge T3 vom Ausgabesteuereingang AS des Speicherbausteins SP und die vierte Taktimpulsfolge T4 vom Steuereingang SE des Exklusiv-ODER-Verknüpfungsgliedes EOD1 abgetrennt. Diese beiden zuletzt genannten Steuereingänge sind, wie schon beschrieben, bei einer anliegenden logischen "0" aktiv.

Solange am Ausgang Q des sechsten Verzögerungs-Flip-Flops VF6 eine logische "1" aufscheint, wird bzw. bleibt über seinen invertierenden Ausgang Q̄ die Zählerstufe Z rückgesetzt.

Der zeitliche Abstand, zu denen die Impulse am Ausgang A der ersten Vergleicherstufe V1 auftreten, entsprechen jeweils einer Rahmenlänge des seriellen Bitstroms BS. Die am Ausgang Q des sechsten Verzögerungs-Flip-Flops VF6 abgreifbare logische "1" liegt auch am Eingang D des siebten Verzögerungs-Flip-Flops VF7 an. Nach zwei weiteren Impulsen am Ausgang A der ersten Vergleicherstufe V1, d.h. nach zwei Rahmenlängen, wird die logische "1" vom Ausgang D zum Ausgang Q des siebten Verzögerungs-Flip-Flops VF7 durchgeschaltet, und an den anderen Eingang des invertierenden UND-Verknüpfungsgliedes UD2 gegeben, an dessen einen Eingang ebenfalls die vom Ausgang Q des sechsten Verzögerungs-Flip-Flops VF6 abgegebene logische "1" anliegt. Auf diese Weise ist sichergestellt, daß der Speicherbaustein SP über zwei Rahmenlängen hinweg mit vom Seriell-Parallelwandler SPW über das erste Verzögerungs-Flip-Flop VF1 abgegebenen Bitwörtern BW geladen wird.

Nach diesen zwei Rahmenlängen wird über das invertierende UND-Verknüpfungsglied UD2, an dessen beiden Eingängen jetzt eine logische "1" anliegt, eine logische "0" an den Rücksetzimpulseingang R des sechsten Verzögerungs-Flip-Flops VF6 gegeben, und hierdurch dessen Ausgang Q auf logisch "0" gesetzt. Hierdurch wird bewirkt, daß von der dritten Taktimpulsfolge T3 der Ausgabesteuereingang AS des Speicherbausteins SP, und von der vierten Taktimpulsfolge T4 der Steuereingang S des Exklusiv-ODER-Verknüpfungsgliedes EOD1 angesteuert werden. Während des Dekodierungsvorganges werden vom Exklusiv-ODER-Verknüpfungsglied EOD1 innerhalb eines Suchrahmens SR immer wieder Bitworte BW registriert, die nur ein mit einer logischen "1" besetztes Bit aufweisen, ohne daß dieses Bit das Synchronisierbit S ist. Hierdurch werden vom Ausgang A des Exklusiv-ODER-Verknüpfungsgliedes EOD1 innerhalb eines Suchrahmens SR mehrere Impulse abgegeben, die über den zweiten Inverter I2 an den Rücksetzimpulseingang R des fünften Verzögerungs-Flip Flops VF5 gegeben werden. Hierdurch wird der Ausgang Q des fünften Verzögerungs-Flip-Flops VF5 auf logisch "0" gesetzt, so daß ein Durchschalten der an dessen Eingang D anliegenden logischen "1" verhindert wird.

Wenn, wie schon beschrieben wurde, das Snchronisierbit S im Bitstrom BS gefunden wurde, wird vom Ausgang A des Exklusiv-ODER-Verknüpfungsgliedes OD1 innerhalb eines Suchrahmens SR nur noch ein Impuls abgegeben. Im Speicherbaustein SP ist nur noch einer der adressierten Speicherplätze mit einer logischen "1" besetzt, nämlich derjenige, in den das Synchronisierbit S eingeschrieben wurde. Geht beispielsweise dieses Synchronisierbit S aufgrund von Störungen auf der Übertragungsstrecke verloren, d.h. die logische "1" des Synchronisierbits S wird auf logisch "0" gesetzt, so wird auch der zugehörige Speicherplatz im Speicherbaustein SP mit logisch "0" überschrieben. Wie bei der Beschreibung der Wirkungsweise der erfindungsgemäßen Schaltungsanordnung zur Dekodierung beschrieben wurde, können während des Dekodierungsvorganges logische Einsen im Speicherbaustein SB durch an dessen Eingang E anliegende logische Nullen auf Bitplätzen des (m+1)-ten Bitwortes BW überschrieben werden.

Da jetzt im Speicherbaustein SP in den adressierten Speicherplätzen nur noch logische Nullen stehen, werden vom Ausgang A des Exklusiv-ODER-Verknüpfungliedes EOD1 keine Impulse mehr abgegeben, und das fünfte Verzögerungs-Flip-Flop VF5 nicht mehr zurückgesetzt. Wie schon beim Einschaltvorgang beschrieben, werden jetzt aufgrund der vom Ausgang A der ersten Vergleicherstufe V1 abgegebenen Impulse erst der Ausgang Q des fünften Verzögerungs-Flip-Flops VF5, und dann nach zwei weiteren Impulsen der Ausgang Q des sechsten Verzögerungs-Flip-Flops VF6 auf logisch "1" gesetzt, und hierdurch für zwei Rahmenlängen das Einschreiben der Bits des seriellen Bitstroms BS, d.h. der zugehörigen Bitwörter BW in den Speicherbaustein SP ermöglicht. Vom Ausgang A der ersten Vergleicherstufe V1 werden aus dem Grund immer noch Impulse abgegeben, da im ersten Register RG1 eine vorhergehende Adresse VAD = x-1 steht, die innerhalb jedes Suchrahmens auch als Adresse AD = x-1 von der Takt- und Adreßaufbereitungsstufe TA abgegeben wird.

Die in Fig. 1 dargestellte Zeitschaltstufe ZS wird bei der in Fig. 2 dargestellten Schaltungsanordnung durch das fünfte bis siebte Verzögerungs-Flip-Flop VF5-VF7, in Zusammenhang mit dem Ausgang A der ersten Vergleicherstufe V1 gebildet.

Im folgenden werden die in Fig. 2 mit unterbrochenen Linien gezeichneten Bausteine und deren Verbindungen, sowie deren Funktionsweise erläutert. Es wird hierbei davon ausgegangen, daß der serielle Bitstrom BS nicht in acht Bit breite Bitworte BW, sondern in zweimal vier Bit breite Bitworte umgewandelt wird.

Im folgenden Beispiel werden also nicht, wie vorstehend beschrieben, die acht Bits des Bitwortes BW vom Ausgang QA des Seriell-Parallelwandlers SPW abgegeben, sondern vom Ausgang QA werden die ersten vier Bits des Bitwortes BW als ein erstes Halbwort BWA, und von einem Ausgang QB des Seriell-Parallelwandlers SPW die zweiten vier Bits des Bitwortes BW als zweites Halbwort BWB abgegeben. Über einen Multiplexer MX wird in einem ersten Schaltzustand als Bitwort BW das erste Halbwort BWA, und in einem zweiten Schaltzustand als Bitwort BW das zweite Halbwort BWB an den Eingang D des ersten Verzögerungs-Flip-Flops VF1 gegeben. Wie schon ausgeführt wurde, ist in diesem Beispiel das Bitwort BW vier Bits breit, und entsprechend viele Anschlüsse haben die Eingänge D des ersten und des zweiten Verzögerungs-Flip-Flops VF1, VF2, der Rücksetzimpulseingang R des ersten Verzögerungs-Flip-Flops VF1, der Eingang E und der Ausgang A des Speicherbausteins SP, der Eingang E des Parallel-Seriellwandlers PSW. Das Exklusiv-ODER-Verknüpfungsglied EOD1 weist eingangsseitig vier Anschlüsse auf.

Da zur Zeit RAM-Bausteine für vier Bit breite Datenworte leichter erhältlich sind als solche für acht Bit breite Datenworte, hat die Verwendung der ersteren Vorteile. Zwei sogenannte 4-Bit RAM-Bausteine zur Bildung eines 8-Bit RAM-Bausteines haben eine erhöhte Leistungsaufnahme. Die Umwandlung des Bitstromes BS in vier Bit breite Bitworte BW ist aufgrund des zu kleinen Adreßbereichs des RAM-Bausteines nicht möglich. Der Bitstrom BS weist, wie schon ausgeführt, in einem Rahmen 1080 Bits auf. Bei der Umwandlung in vier Bit breite Bitworte BW ergeben sich 270 Adressen. Bekannte 4-Bit RAM-Bausteine weisen aber nur 256 adressierbare Speicherplätze auf.

Die Rahmendekodierung des Bitstromes BS läuft bei der Verwendung der ersten bzw. zweiten Halbworte BWA, BWB als Bitworte BW vollkommen analog zur Rahmendekodierung ab, bei der acht Bit breite Bitworte BW verwendet werden.

Das im Bitstrom BS enthaltene Synchronisierbit S befindet sich hierbei entweder in einem der ersten Halbworte BWA, oder in einem der zweiten Halbworte BWB. Bei der Rahmendekodierung wird erst in den ersten bzw. zweiten Halbworten BWA, BWB, und anschließend, wenn in diesem das Synchronisierbit S nicht gefunden wurde, in den zweiten bzw. ersten Halbworten BWB, BWA nach dem Synchronisierbit S gesucht.

Im folgenden werden die bei der Halbwortver-sion zusätzlich benötigten Schaltungsteile be-schrieben.

Dies ist der schon beschriebene Multiplexer MX, der einen Eingangswähleingang EW aufweist, über den einer der nicht näher bezeichneten Eingänge des Multiplexers MX, zu dessen ebenfalls nicht näher bezeichneten Ausgang durchgeschaltet wird. Der Ausgang Q des sechsten Verzögerungs Flip-Flops VF6 ist über eine weitere Teilerstufe TE2, die ein Teilungsverhältnis von 2 zu 1 aufweist, mit einem weiteren Eingang D4 des zweiten Verzögerungs-Flip-Flops VF2, und mit dem Eingangswähleingang EW des Multiplexers MX verbunden. In der Halbwortversion beinhaltet der mit D bezeichnete Eingang des zweiten Verzögerungs-Flip-Flops VF2 die Anschlüsse D0 bis D3. Analoges gilt für den Ausgang Q des zweiten Verzögerungs-Flip-Flops VF2. Ein weiterer Ausgang Q4 des zweiten Verzögerungs Flip-Flops VF2 ist mit einem Eingang eines weiteren Exklusiv-ODER-Verknüpfungsgliedes EOD2 verbunden, an dessen anderen Eingang die dritten Taktansteuerungsimpulse Q3 anliegen. Das vom zweiten Exklusiv-ODER-Verknüpfungsglied EOD2 abgegebene Signal liegt an einem weiteren Eingang des UND-Verknüpfungsgliedes UD1 an.

Es wird angenommen, daß nach dem Anschal-ten der Schaltungsanordnung zur Rahmendekodie-rung an eine Stromversorgung vom weiteren Ausgang Q4 des zweiten Verzögerungs-Flip-Flops VF2 eine logische "1" abgegeben wird. Durch diese logische "1" wird beispielsweise vom Multiplexer MX das erste Halbwort BWA durchgeschaltet.

In einem ersten Fall befindet sich das Synchronisierbit S an einer Stelle im Bitstrom BS, die in ein zweites Halbwort BWB umgewandelt wird. Durch den Dekodierungsvorgang, das heißt bei der Suche nach dem Synchronisierbit S in den ersten Halbwörtern BWA, wird das Synchronisierbit S deshalb nicht gefunden.

Hierbei läuft der gleiche Vorgang ab, wie er schon bei einem Verlust des Synchronisierbits S beschrieben wurde. Da kein Synchronisierbit S in den ersten Halbwörter BWA gefunden wird, stehen schließlich im Speicherbaustein SP nur noch logische Nullen. Dies bewirkt eine logische "1" am Ausgang Q des sechsten Verzögerungs-Flip-Flops VF6, da vom Exklusiv-ODER-Verknüpfungsglied EOD1 das fünfte Verzögerungs-Flip-Flop nicht mehr zurückgesetzt wird. Es wird angenommen, daß diese logische "1", das heißt der Wechsel zur logischen "1", über die weitere Teilerstufe TE2 eine logische "0" am Eingangswähleingang EW des Multiplexers MX bewirkt.

Aufgrund der logischen "0" am Eingangswähleingang EW des Multiplexers MX wird von diesem das zweite Halbwort BWB durchgeschaltet. Danach läuft ein Suchvorgang ab, der mit dem Auffinden des Synchronisierbits S in den zweiten Halbwörtern BWB endet. Wie vorstehend schon bei den acht Bit breiten Bitworten BW beschrieben wurde, läuft der Zähler Z hoch und bewirkt die Übernahme des anliegenden (m + 1)-ten zweiten Halbwortes BWB sowie der von der weiteren Teilerstufe TE2 abgegebenen logischen "0" in das zweite Verzögerungs-Flip-Flop VF2. Durch das Aufscheinen der logischen "0" am weiteren Ausgang Q4 des zweiten Verzögerungs-Flip-Flops VF2 werden die dritten Taktansteuerungsimpulse Q3 nicht invertiert über das weitere Exklusiv-ODER-Verknüpfungsglied EOD2 an das UND-Verknüpfungsglied UD1 gegeben.

Bei der weiteren Beschreibung wird nochmals auf die Fig. 4 Bezug genommen. Bei der Halbwortversion werden innerhalb einer Adresse AD = x-1 vom Ausgang A des Parallel-Seriellwandlers PSW zwei Impulse abgegeben. Gegenüber einem acht Bit breiten Bitwort BW am Eingang E des Parallel-Seriellwandlers PSW benötigt die Umwandlung eines vier Bit breiten Bitwortes BW nur die halbe Zeitspanne. Von diesen zwei Impulsen muß nun derjenige als Synchronisiersignal SS genommen werden, der in diesem Fall zum zweiten Halbwort BWB gehört.

Über das Ausgangssignal des weiteren Exklusiv-ODER-Verknüpfungsgliedes EOD2 wird innerhalb einer Adresse AD der zweite der beiden vom Ausgang A des Parallel-Seriellwandlers PSW abgegebenen Impulse ausgewählt, und vom Ausgang A des UND-Verknüpfungsgliedes UD1 als Synchronisiersignal SS abgegeben.

In einem zweiten Fall befindet sich das Synchronisierbit S an einer Stelle im Bitstrom BS, die in ein erstes Halbwort BWA umgewandelt wird. Durch den Dekodierungsvorgang, das heißt bei der Suche nach dem Synchronisierbit S in den ersten Halbwörtern BWA wird das Synchronisierbit S, wie vorstehend anhand des acht Bit breiten Bitwortes BW erläutert gefunden.

Aufgrund der in diesem Fall am weiteren Ausgang Q4 des zweiten Verzögerungs-Flip-Flops VF2 abgreifbaren logischen "1" werden die dritten Taktansteuerungsimpulse Q3 invertiert über das weitere Exklusiv-ODER-Verknüpfungsglied EOD2 an das UND-Verknüpfungsglied UD1 gegeben. Hierdurch wird innerhalb einer Adresse AD der erste der beiden vom Ausgang A des Parallel-Seriellwandlers PSW abgegebene Impuls ausgewählt, und vom Ausgang A des UND-Verknüpfungsgliedes UD1 als Synchronisiersignal SS abgegeben. Dieser Fall ist in der Fig. 4 nicht dargestellt.

Analoge Vorgänge laufen ab, wenn aufgrund anderer logischer Zustände am weiteren Eingang D4 bzw. weiteren Ausgang Q4 des zweiten Verzögerungs-Flip-Flops VF2 sich die Reihenfolge der Halbwörter BWA bzw. BWB, in denen nach dem Snynchronisierbit S gesucht wird, umkehrt.

## Ansprüche

1. Verfahren zur Rahmendekodierung, insbesondere in einem Multiplexer-Demultiplexersystem zur Digitalsignal-Übertragung, wobei ein serieller Bitstrom (BS) eine Rahmenstruktur mit einer periodisch auftretenden, den Beginn jedes Rahmens kennzeichnenden Synchronisierinformation aufweist,
**dadurch gekennzeichnet,**
daß unter Verwendung eines Synchronisierbits (S) als Synchronisierinformation fortlaufend, beginnend mit einem m-ten Suchrahmen (SR) und mit dem nachfolgenden (m + 1)-ten Suchrahmen (SR), wobei jeder Suchrahmen (SR) gleichviele Bits aufweist wie der Rahmen, eine logische UND-Verknüpfung durchgeführt wird, wobei das Ergebnis den (m + 1)-ten Suchrahmen (SR) für die nächste Verknüpfung bildet,
daß festgestellt wird, wenn nur noch ein Bit, das Synchronisierbit (S) im Suchrahmen (SR) mit einer logischen "1" besetzt ist, und diese Besetzung über mehrere Suchrahmen (SR) erhalten bleibt,
daß ein Synchronisiersignal (SS) entsprechend der Zeitlage des Synchronisierbits (S) erzeugt wird,
daß der Bitstrom (BS) und/oder das Synchronisiersignal (SS) so verzögert werden, daß das Synchronisiersignal (SS) und das Synchronisierbit (S) in einem verzögerten Bitstrom (VBS) synchron auftreten,
und daß der Suchrahmen (SR) in Abschnitte unterteilt wird, wobei die UND-Verknüpfung mit den Abschnitten durchgeführt wird, die in den aufeinanderfolgenden Suchrahmen (SR) die gleiche Position einnehmen.

2. Verfahren nach Anspruch 1,
**dadurch gekennzeichnet,**
daß die UND-Verknüpfungen jeweils mit den r-ten Abschnitten der aufeinanderfolgenden Suchrahmen (SR) durchgeführt werden, wobei in dem Fall die UND-Verknüpfungen mit den (r + 1)-ten Abschnitten der aufeinanderfolgenden Suchrahmen (SR) weitergeführt werden, in dem das Ergebnis der letzten Verknüpfung der r-ten Abschnitte ausschließlich mit logischen Nullen besetzte Dits aufweist.

3. Schaltungsanordnung zur Rahmendekodierung, ins besondere in einmen Multiplexer-Demultiplexersystem zur Digitalsignalübertragung, an der ein seriellen Bitstrom (BS) und eine zugehörige Taktimpulsfolge (TO) anliegen,
**dadurch gekennzeichnet,**
daß eine Seriell-Parallelwandlerstufe (SPS) vorgesehen ist, in der der Bitstrom (BS) in parallele Bitworte (BW) umgewandelt wird, wobei die Bits eines Suchrahmens (SR) in wenigstens einem Bitwort (BW) dargestellt werden,
daß UND-Verknüpfungsglieder vorgesehen sind, denen die einander zugeordneten Bitworte (BW) bitweise zugeführt sind, daß Speicherplätzen (SPL) den UND-Verknüpfungsgliedern zur Speicherung des Ergebnisses dieser Verknüpfung nachgeschaltet sind,
daß ferner ein Exklusiv-ODER-Verknüpfungsglied mit den Speicherplätzen (SPL) verbunden ist und ein Signal abgibt, wenn das wenigstens eine Bitwort (BW) eines Suchrahmens (SR) nur ein auf logisch "1" gesetztes Bit aufweist,
daß dieses Signal am Schalteingang einer Parallel-Seriellwandlerstufe (PSS) anliegt, die daraufhin dieses wenigstens eine Bitwort (BW) in ein serielles Synchronisiersignal (SS) umwandelt, und
daß im Signalweg des Bitstroms (BS) und/oder des Synchronisiersignals (SS) Verzögerungsstufen (VS1, VS2) vorgesehen sind.

4. Schaltungsanordnung nach Anspruch 3,
**dadurch gekennzeichnet,**
daß die Seriell-Parallelwandlerstufe (SPS) einen SeriellParallelwandler (SPW) aufweist, in dem der Bitstrom (BS) in n- Bit breite Bitworte (BW) umgewandelt wird, wobei die Anzahl der Bits in einem Rahmen ein ganzzahliges Vielfaches der Zahl n ist,

daß sich die Speicherplätze (SPL) in einem RAM-Speicherbaustein (SP) mit einem Ausgabesteuereingang (AS) befinden,

daß die Taktimpulsfolge (TO) an einer Takt- und Adreßaufbereitungsstufe (TA) anliegt, die zyklisch Adressen (AD) bildet, wobei die Anzahl der Adressen der Anzahl der Bitworte (BW) in einem Suchrahmen (SR) entspricht, und wobei die UND-Verknüpfungen mit Bitworten (BW) durchgeführt wird, die unter der gleichen Adresse (AD) in den Speicherbaustein (SP) geschrieben werden, und daß die UND-Verknüpfungsglieder durch ein erstes Verzögerungs Flip-Flop (VF1) realisiert sind, über das die Bitworte (BW) an einen Eingang (E) des Speicherbausteins (SP) gegeben werden, und das einen Rücksetzimpulseingng (R) aufweist, an dem ein Ausgang (A) des Speicherbausteins (SP) angeschaltet ist, wobei durch das Anlegen des m-ten Bitwortes (BW) mit der Adresse (AD) = x an den Rücksetzimpulseingng (R) des ersten Verzögerungs-Flip-Flops (VF1) die UND-Verknüpfung mit dem an dessen Ausgang (Q) abgreifbaren (m + 1)-ten Bitwort (BW) mit der Adresse (AD) = x durchgeführt wird.

5. Schaltungsanordnung nach Anspruch 4,
**dadurch gekennzeichnet,**
daß das am Eingang (E) des Speicherbausteins (SP) anliegende Bitwort (BW) an einem Exklusiv-ODER-Verknüpfungsglied (EOD1) anliegt,

daß von einem Ausgang (A) des Exklusiv-ODER-Verknüpfungsgliedes (EOD1) ein Impuls abgegeben wird, wenn von diesem ein Bitwort (BW) mit nur einem auf logisch "1" gesetzten Bit registriert wird, durch den in ein erstes Register (RG1) eine von der Takt- und Adreßaufbereitungsstufe (TA) abgegebene vorhergehende Adresse (VAD) übernommen wird, und daß eine erste Vergleicherstufe (V1) vorgesehen ist, mit einem ersten Eingang (E1), an dem die Adresse (AD) anliegt, und mit einem zweiten Eingang (E2), an dem ein Ausgang (Q) des ersten Registers (RG1) angeschaltet ist, wobei die erste Vergleicherstufe (V1) an einem Ausgang (A) ein Signal abgibt, wenn an seinen Eingängen (E1, E2) gleiche Adressen anliegen, das heißt, wenn innerhalb eines Suchrahmens (SR) nur ein Bitwort (BW) mit nur einem auf logisch "1" gesetzten Bit (Synchronisierbit (S)) gefunden wird.

6. Schaltungsanordnung nach Anspruch 5,
**dadurch gekennzeichnet,**
daß ein Zähler (Z) vorgesehen ist, der nach einer vorbestimmten Anzahl der vom Ausgang (A) der ersten Vergleicherstufe (V1) abgegebenen Signale an einem Ausgang (A) ein Signal abgibt,

daß ein zweites Register (RG2) vorgesehen ist, in das bei einem solchen Signal die vorhergehende Adresse (VAD) übernommen wird, und daß eine zweite Vergleicherstufe (V2) vorgesehen ist, mit einem ersten Eingang (E1), an dem die Adresse (AD) anliegt, und mit einem zweiten Eingang (E2), an dem ein Ausgang (Q) des zweiten Registers (RG2) angeschaltet ist, wobei die zweite Vergleicherstufe (V2) an einem Ausgang (A) ein Signal abgibt, wenn an seinen Eingängen (E1, E2) die gleichen Adressen anliegen, das heißt, wenn das einzige auf logisch "1" gesetzte Bit (Synchronisierbit (S)) in so vielen Suchrahmen (SR) gefunden wurde, wie es durch die vorbestimmte Anzahl festgelegt ist.

7. Schaltungsanordnung nach Anspruch 6,
**dadurch gekennzeichnet,**
daß die Parallel-Seriellwandlerstufe (PSS) einen Parallel-Seriellwandler (PSW) und ein zweites Verzögerungs-Flip-Flop (VF2) aufweist, über das das am Eingang (E) des Speicherbausteins (SP) anliegende Bitwort (BW) an den Parallel-Seriellwandler (PSW) gegeben wird, wobei der Schalteingang, an dem das von Ausgang (A) des Zählers (Z) abgegebene Signal anliegt, durch einen Takteingang des zweiten Verzogerungs-Flip-Flops (VF2) realisiert ist, und

daß ein UND-Verknüpfungsglied (UD1) vorgesehen ist, an dem eine vom Parallel-Seriellwandler (PSW) abgegebene serielle Bitfolge und das vom Ausgang (A) der zweiten Vergleicherstufe (V2) abgegebene Signal anliegen, wobei von einem Ausgang (A) des UND-Verknüpfungsgliedes (UD1) das Synchronisiersignal (SS) abgegeben wird.

8. Schaltungsanordnung nach einem der Ansprüche 4 bis 7,
**dadurch gekennzeichnet,**
daß die n Bits des n Bit breiten Bitwortes (BW) über zwei Ausgänge (QA, QB) des Seriell-Parallelwandlers zu zweimal n/2 Bits an Eingänge eines Multiplexers (MX) gegeben werden, der in einem ersten Schaltzustand ein erstes Halbwort (BWA), und in einem zweiten Schaltzustand ein zweites Halbwort (BWB) abgibt, wobei die nachfolgenden Bausteine zur Verarbeitung der n/2 Bit breiten Halbworte (BWA, BWB) anstelle der n Bit breiten Bitworte (BW) ausgestaltet sind, und

daß nach einer erfolglosen Suche nach dem Synchronisierbit (S) in einem der Halbworte (BWA bzw. BWB) die Suche in dem jeweils anderen Halbwort (BWB bzw. BWA) fortgesetzt wird.

9. Schaltungsanordnung nach einem der Ansprüche 4 bis 8,
**dadurch gekennzeichnet,**
daß die Zahl n der Zahl 8 entspricht.

## Claims

1. Method of frame decoding, preferably in a multiplexer-demultiplexer system for digital signal transmission, in which method a serial bit stream (BS) has a frame structure with a periodically occurring item of synchronising information which characterises the start of each frame, characterised in that, using a synchronising bit (S) as item of synchronising information, a logical AND operation is continuously carried out, commencing with an m-th search frame (SR) and with the subsequent (m + 1)-th search frame (SR), each search frame (SR) having the same number of bits as the frame and the result forming the (m + 1)-th search frame (SR) for the next logic operation, in that it is determined when only one bit, the synchronising bit (S), in the search frame (SR) is occupied by a logic "1", and this setting is maintained over a plurality of search frames (SR), in that a synchronising signal (SS) is generated in accordance with the timing position of the synchronising bit (S), in that the bit stream (BS) and/or the synchronising signal (SS) are delayed in such a way that the synchronising signal (SS) and the synchronising bit (S) occur synchronously in a delayed bit stream (VBS), and in that the search frame (SR) is divided into sections, the AND logic operation being carried out with the sections which assume the same position in the consecutive search frames (SR).

2. Method according to Claim 1, characterised in that the AND logic operations are carried out in each case with the r-th sections of the consecutive search frames (SR), the AND logic operations being carried on with the (r + 1)-th sections of the consecutive search frames (SR) in the event that the result of the last logic operation of the r-th sections has bits occupied exclusively with logic zeros.

3. Circuit arrangement for frame decoding, preferably in a multiplexer-demultiplexer system for digital signal transmission, to which a serial bit stream (BS) and an associated clock pulse sequence (TO) are applied, characterised in that a series-parallel converter stage (SPS) is provided in which the bit stream (BS) is converted into parallel bit words (BW), the bits of a search frame (SR) being represented in at least one bit word (BW), in that AND logic operation elements are provided to which the bit words (BW) associated with one another are fed bit by bit, in that memory locations (SPL) are connected downstream of the AND logic operation elements for storing the result of this logic operation, in that furthermore an exclusive-OR logic operation element is connected to the memory locations (SPL) and emits a signal if the at least one bit word (BW) of a search frame (SR) has only one bit set to logic "1", in that this signal is applied to the circuit input of a parallel-series converter stage (PSS) which subsequently converts this at least one bit word (BW) into a serial synchronising signal (SS), and in that delay stages (VS1, VS2) are provided in the signal path of the bit stream (BS) and/or of the synchronising signal (SS).

4. Circuit arrangement according to Claim 3, characterised in that the series-parallel converter stage (SPS) has a series-parallel converter (SPW) in which the bit stream (BS) is converted into n-bit wide bit words (BW), the number of bits in one frame being an integral multiple of the number n, in that the memory locations (SPL) are located in a RAM memory module (SP) having an output control input (AS), in that the clock pulse sequence (TO) is applied to a clock and address processing stage (TA) which forms addresses (AD) in cycles, the number of addresses corresponding to the number of bit words (BW) in a search frame (SR), and the AND logic operations being carried out with bit words (BW) which are written under the same address (AD) in the memory module (SP), and in that the AND logic operation elements are realised by means of a first delay flip-flop (VF1) via which the bit words (BW) are transmitted to one input (E) of the memory module (SP) and which has a resetting pulse input (R) to which an output (A) of the memory module (SP) is connected, the AND logic operation being carried out with the (m + 1)-th bit word (BW), which can be tapped off at the output (Q) of the first delay flip-flop (VE1), with the address (AD) = x by applying the m-th bit word (BW) with the address (AD) = x to the resetting pulse input (R) of the said delay flip-flop (VF1).

5. Circuit arrangement according to Claim 4 characterised in that the bit word (BW) applied to the input (E) of the memory module (SP) is applied to an exclusive -OR logic operation element (EOD1), in that a pulse is emitted from an output (A) of the exclusive-OR logic operation element (EOD1) if a bit word (BW) having only one bit set to logic "1" is registered by the said exclusive-OR logic operation element (EOD1), by means of which bit a preceding address (VAD) emitted by the clock and address processing stage (TA) is transferred into a first register (RG1), and in that a first comparative stage (V1) is provided having a first input (E1) to which the address (AD) is applied and having a second input (E2) to which an output (Q) of the first register (RG1) is connected, the first comparative stage (V1) emitting a signal at an output (A) if identical addresses are applied to its inputs (E1, E2), that is to say if, within a search frame (SR), only one bit word (BW) with only one bit (synchronising bit (S)) set to logic "1" is found.

6. Circuit arrangement aocording to Claim 5, characterised in that a counter (Z) is provided which emits a signal at an output (A) after a predetermined number of signals emitted from the output (A) of the first comparative stage (V1), in that a second register (RG2) is provided into which the preceding address (VAD) is transferred in the event of such a signal, and in that a second comparative stage (V2) is provided having a first input (E1) to which the address (AD) is applied and having a second input (E2) to which an output (Q) of the second register (RG2) is connected, the second comparative stage (V2) emitting a signal at an output (A) if the same addresses are applied to its inputs (E1, E2), that is to say if the single bit (synchronising bit(S)) set to logic "1" has been found in as many search frames (SR) as is determined by the predetermined number.

7. Circuit arrangement according to Claim 6, characterised in that the parallel-series converter stage (PSS) has a parallel-series converter (PSW) and a second delay flip-flop (VF2) via which the bit word (BW) applied to the input (E) of the memory module (SP) is transmitted to the parallel-series converter (PSW), the switching input to which the signal emitted by the output (A) of the counter (Z) is applied being realised by means of a clock input of the second delay flip-flop (VF2), and in that an AND logical operation element (UD1) is provided to which a serial bit sequence emitted by the parallel-series converter (PSW) and the signal emitted by the output (A) of the second comparative stage (V2) are applied, the synchronising signal (SS) being emitted by an output (A) of the AND logic operation element (UD1).

8. Circuit arrangement according to one of Claims 4 to 7, characterised in that the n bits of the n bit wide bit word (BW) are transmitted via two outputs (QA, QB), of the series-parallel converter in the form of two sets of n/2 bits to inputs of a multiplexer (MX) which emits a first half word (BWA) in a first switching state, and in a second switching state a second half word (BWB), the subsequent modules being designed for processing the n/2 bit wide half words (BWA, BWB) instead of the n bit wide bit words (BW), and in that after an unsuccessful search for the synchronising bit (S) in one of the half words (BWA or BWB) the search is continued in the respective other half word (BWB or BWA).

9. Circuit arrangement according to one of Claims 4 to 8, characterised in that the number n corresponds to the number 8.

## Revendications

1. Procédé pour réaliser le décodage de trames, notamment dans un système à multiplexeur-démultiplexeur, pour la transmission de signaux numériques, un flux binaire en série (BS) possédant une structure de trame comportant une information de synchronisation apparaissant périodiquement et caractérisant le début de chaque trame,
caractérisé par le fait
que, moyennant l'utilisation d'un bit de synchronisation (S) en tant qu'information de synchronisation, une combinaison ET logique est exécutée de façon permanente, en commençant par une m-ème trame de recherche (SR) et avec la (m + 1)-ème trame de recherohe suivante (SR), chaque trame de recherche (SR) comportant autant de bits que la trame, le résultat formant la (m + 1)-ème trame de recherche (SR) pour la combinaison immédiatement suivante,
qu'on détermine si seul encore un bit, à savoir le bit de synchronisation (S) dans la trame de recherche (SR), est occupé par un "1" logique, et si cette oocupation reste maintenue pendant plusieurs trames de recherche (SR),
qu'un signal de synchronisation (SS) est produit en fonction de la position temporelle du bit de synchronisation (S), que le flux binaire (BS) et/ou le signal de synchronisation (SS) sont retardés de telle sorte que le signal de synchronisation (SS) et le bit de synchronisation (S) apparaissent en synchronisme dans un flux binaire retardé (VBS), et que la trame de recherche (SR) est subdivisée en sections, la combinaison ET étant réalisée avec les sections, qui occupent la même position dans les trames de recherche successives (SR).

2. Procédé suivant la revendication 1, caractérisé par le fait

que les combinaisons ET sont exécutées respectivement avec les r-èmes sections des trames de recherche successives (SR), les combinaisons ET étant poursuivies avec les (r + 1)-èmes sections des trames de recherche successives (SR), dans le cas où le résultat de la dernière combinaison des r-èmes sections comporte des bits occupés exclusivement par des zéros logiques.

3. Montage pour réaliser le décodage de trames, notamment dans un système à multiplexeur-démultiplexeur pour la transmission de signaux numériques, auxquels sont appliqués un flux binaire en série (BS) et une suite associée d'impulsions de cadence (T0), caractérisé par le fait

qu'il est prévu un étage de conversion série/parallèle (SPS), dans lequel le flux binaire (BS) est converti en des mots binaires parallèles (BW), les bits d'une trame de recherche (SR) étant représentés dans au moins un mot binaire (BW),

qu'il est prévu des circuits combinatoires ET, auxquels sont envoyés, bit-par-bit, les mots binaires (BW) associés les uns aux autres,

que des zones de mémoire (SPL) sont disposées en aval des circuits combinatoires ET pour mémoriser le résultat de cette combinaison,

qu'en outre un circuit combinatoire OU-Exclusif est relié aux zones de mémoire (SPL) et délivre un signal lorsqu'au moins un mot binaire (BW) d'une trame de recherche (SR) possède seulement un bit positionné sur le "1" logique, que le signal est appliqué à l'entrée de commutation d'un étage de conversion parallèle/série (PSS), qui convertit alors au moins un tel mot binaire (PW) entre un signal de synchronisation série (SS), et

qu'il est prévu des étages de retardement (VS1,VS2) dans la voie de transmission des signaux du flux binaire (BS) et/ou du signal de synchronisation (SS).

4. Montage suivant la revendication 3, caractérisé par le fait

que l'étage de conversion série/parallèle (SS) comporte un convertisseur série/parallèle (SPW), dans lequel le flux binaire (BS) est converti en des mots binaires (BW) possédant une largeur de n bits, le nombre des bits dans une trame étant égal à un multiple entier du nombre n,

que les zones de mémoire (SPL) sont situées dans un module de mémoire RAM (SP) comportant une entrée de commande de sortie (AS),

que la suite d'impulsions de cadence (T0) est appliquée à un étage (TA) de préparation de cadence et d'adresses, qui forme cycliquement des adresses (AD), le nombre des adresses correspondant au nombre des mots binaires (BW) dans une trame de recherche (SA), les combinaisons ET étant réalisées avec des mots binaires (BW), qui sont inscrits à la même adresse (AD) dans le module de mémoire (SP), et

que les circuits combinatoires ET sont constitués par une première bascule bistable de retardement (VF1), au moyen de laquelle les mots binaires (BW) sont envoyés à une entrée (E) du module de mémoire (SP) et qui comporte une entrée (R) d'impulsions de remise à l'état initial, à laquelle est raccordée une sortie (A) du module de mémoire (SP), auquel cas, sous l'effet de l'application du m-ème mot binaire (BW) avec l'adresse (AD) = x à l'entrée (R) d'impulsions de remise à l'état initial de la première bascule bistable de retardement (VF1), la combinaison ET est réalisée avec le (m + 1)-ème mot binaire (BW), qui peut être prélevé sur la sortie (Q) de cette bascule bistable et possède l'adresse (AD) = x.

5. Montage suivant la revendication 4, caractérisé par le fait

que le mot binaire (BW) présent à l'entrée (E) du module de mémoire (SP) est appliqué à un circuit combinatoire OU-Exclusif (EOD1),

qu'une impulsion est délivrée par une sortie (A) du circuit combinatoire OU-Exclusif (EOD1) lorsque ce circuit enregistre un mot binaire (BW) comportant seulement un bit positionné sur le "1" logique, cette impulsion provoquant le transfert d'une adresse précédente (VAD), délivrée par l'étage (TA) de préparation de cadences et d'adresses, dans un premier registre (RG1), et

qu'il est prévu un premier étage comparateur (V1) comportant une première entrée (E1), à laquelle est appliquée l'adresse (AD) et une seconde entrée (E2), à laquelle est raccordée une sortie (Q) du premier registre (RG1), le premier étage comparateur (V1) délivrant, sur une sortie (A), un signal lorsque des adresses identiques sont appliquées à ses entrées (E1,E2) c'est-à-dire lorsqu'à l'intérieur d'une trame de recherche (SPA), seul un mot binaire (BW) comportant seulement un bit positionné sur le "1" logique (bit de synchronisation (S)) est trouvé.

6. Montage suivant la revendication 5, caractérisé par le fait

qu'il est prévu un compteur qui, au bout d'un nombre prédéterminé des signaux délivrés par la sortie (A) du premier étage comparateur (V1), délivre un signal sur sa sortie (A), qu'il est prévu un second registre (RG2), dans lequel l'adresse précédente (VAD) est transférée, lors de l'apparition d'un tel signal, et qu'il est prévu un second étage comparateur (V2), comportant une première entrée (E1), à laquelle est appliquée l'adresse (AD), une seconde entrée (E2), à laquelle est raccordée une sortie (Q) du second registre (RG2), le second étage comparateur (V2) délivrant un signal sur une sortie (A) lorsque les mêmes adresses sont appliquées à ses entrées (E1,E2), c'est-à-dire lorsque le seul bit positionné sur le "1" logique (bit de synchronisation (S)) a été trouvé dans un nombre de trames de recherche (SR), égal à celui fixé par le nombre prédéterminé.

7. Montage suivant la revendication 6, caractérisé par le fait

que l'étage de conversion parallèle/série (PSS) possède un convertisseur parallèle/série (PSW) et une seconde bascule bistable de retardement (VS2), au moyen de laquelle le mot binaire (BW) appliqué à l'entrée (E) du module de mémoire (SP) est envoyé au convertisseur parallèle/série (PW), l'entrée de commutation, à laquelle est appliqué le signal délivré par la sortie (A) du compteur (Z), étant constituée par une entrée de cadence de la seconde bascule de retardement (VF2), et

qu'il est prévu un circuit combinatoire ET (UD1), auquel sont appliqués une suite séquentielle de bits, délivrée par le convertisseur parallèle/série (PSW), et le signal délivré par la sortie (A) du second étage comparateur (V2), le signal de synchronisation (SS) étant délivré par la sortie (A) du circuit combinatoire ET (UD1).

8. Montage suivant l'une des revendications 4 à 7, caractérisé par le fait

que les n bits du mot binaire (BW) possédant une largeur de n bits sont envoyés par l'intermédiaire deux sorties (QA,QB) du convertisseur série/parallèle sous la forme de deux fois n/2 bits, aux entrées d'un multiplexeur (MX), qui, dans un premier état de commutation, délivre un premier demi-mot (PW1) et, dans un second état de commutation, délivre un second demi-mot (BWB), les modules suivants étant agencés pour le traitement des demi-mots (BWA,BWB) possédant une largeur égale à n/2 bits, à la place des mots binaires (BW) possédant une largeur de n bits, et

qu'après une recherche infructueuse après le bit de synchronisation (S) dans l'un des demi-mots (BWA ou BWB), la recherche se poursuit dans l'autre demi-mot respectif (BWB ou BWA).

9. Montage suivant l'une des revendications 4 à 8, caractérisé par le fait que le nombre n correspond au nombre 8.

FIG 1

EP 0 232 886 B1

FIG 2

FIG 3

# FIG 4

SR Nr.

AD (TA)

VAD (TA)

A (EOD1)

Q (RG1)

A (V1)

Q (RG2)

A (V2)

A (PSW)

A (UD1)

VBS (VF4)

A (PSW) [4-Bit]

EOD2, bei Q4 (VF2) = "0"

EP 0 232 886 B1